# EUROPEAN PATENT APPLICATION

(11) **EP 4 841 505 A1**
(43) Date of publication of application: **18.11.2026**
(21) Application number: 25738825.6
(22) Date of filing: 08.01.2025
(51) Int. Cl.: G06K 19/077, G06K 19/07, G06K 7/10, G06F 12/02, B60C 23/04, H01Q 1/22

(54) **TIRE INCLUDING ELECTRONIC DEVICE HAVING DATA STRUCTURE FOR TIRE MANAGEMENT, AND MANAGEMENT METHOD AND MANAGEMENT SYSTEM THEREFOR**

(30) Priority: 09.01.2024 KR 20240003258; 09.01.2024 KR 20240003359; 01.04.2024 KR 20240043960
(71) Applicant: HANKOOK TIRE & TECHNOLOGY CO., LTD., Gyeonggi-do 13494 (KR)
(72) Inventor: SO, Soon-Hong, Daejeon 34127 (KR)
(74) Representative: Stöckeler, Ferdinand
(86) International application number: PCT/KR2025/000358
(87) International publication number: WO 2025/150858

(57) **Abstract**

The present disclosure relates to a tire including an electronic device having data structures for tire management, and more particularly, to a tire including an electronic device having data structures for tire management that allows the presence or absence of new electronic modules, such as a sound-absorbing material, a sealant, an additional material, a sensor, and a stud, which are additionally attached inside the structure of the tire or to the inner or outer surface of the tire, to be easily identified by reading an RFID tag without accessing an online database. The configuration of the present disclosure for achieving the above object provides a tire including an electronic device having data structures for tire management, wherein the tire is provided with the electronic device, and the electronic device includes: a substrate unit on which a circuit is formed; an antenna unit provided on the substrate unit; and an EPC memory part provided on the substrate unit, wherein the EPC memory part consists of 96 bits or more, is configured to record and read a tire ID, and has a plurality of memories configured to divide and store a product serial number part.

## Description

### [TECHNICAL FIELD]

The present disclosure relates to a tire including an electronic device having data structures for tire management, and more particularly, to a tire including an electronic device having data structures for tire management that allows the presence or absence of new electronic modules, such as a sound-absorbing material, a sealant, an additional material, a stud, and a sensor, which are additionally attached inside the structure of the tire or to the inner or outer surface of the tire, to be easily identified by reading an RFID tag without accessing an online database.

In addition, the present disclosure relates to a tire equipped with an electronic device for monitoring the tire by easily storing and reading data in an electronic device such as an RFID, and to a management method and a management system thereof.

### [BACKGROUND ART]

Recently, with the increasing development of technologies such as connected cars and autonomous vehicles, RFID tires, electronic tires, and intelligent tires, in which an electronic device is attached to or inserted into a tire, have been developed and sold.

An intelligent tire monitoring system is a technology that improves vehicle safety by mounting a chip or a sensor on a tire to monitor the condition of the tire and delivering the tire condition to a driver in real time. Such an intelligent tire monitoring system communicates with various safety devices for the safety of the driver and passengers in the vehicle, and provides tire monitoring data including various devices.

Such an intelligent tire is designed to measure tire-related information, process the measured information, and deliver the information to a user.

In addition, various wireless transmission methods are used to deliver such information.

In particular, for the electronic device installed in an intelligent tire, an electronic chip and an antenna are designed according to the frequency and recognition distance desired by each consumer, and information transmitted at various frequencies can be acquired according to the circuit design of a receiving end.

Specifically, a device for providing data for monitoring an object includes radio frequency identification (RFID). A tire to which an RFID tag is attached includes a chip in which various history information of the tire is stored, and an antenna for wireless communication with a reader. The chip stores not only unique information of the tire, such as a date of manufacture, a manufacturer, and a product number, but also stores and updates the entire logistics information from the tire production process to sale. The structure is such that information from the reader is stored and updated in the chip through the antenna, and the information stored in the chip is transmitted to the reader through the antenna.

Meanwhile, an ISO standard has been established and published for inputting the ID of a tire, and the ISO standard indicates a tire manufacturer number, product information, and a tire serial number as a unique number of each manufacturer.

The ISO standard follows the format of GS1, an international private standards organization, and indicates the unique number in binary.

However, despite such a standard, the storage method of the memory area in which the tire ID is stored and the data management method differ for each manufacturer and for each customer.

Accordingly, there is a need for a technology for independently reading and storing information about a tire stored in a memory.

In addition, conventionally, since it was necessary to access an online database in order to obtain information about a tire, there was also a problem in that it was difficult to read tire information in a place where the Internet environment is poor.

US 9,177,183 B2, 'Method for reading data stored in an electronic device for a tire,' describes a method of reading data stored in a memory of an electronic device included in a tire, a memory including a data storage area having a field reserved for a serial number of the tire, and a method in which the serial number is stored in bit form. To this end, in order to decode the serial number of the tire, at least two allocation areas are required in the stored area, and a process of converting the binary number of the allocation areas into a decimal number and converting the decimal number into a character in one of the areas is required. Therefore, in order to generate the serial number, a process of dividing the area in which the serial number is stored into at least two areas, processing the data retrieved from the respective areas to convert the data into decimal numbers, and matching the data with characters is required.

Korean Patent No. 10-2490773, 'Damage monitoring system and method for pneumatic tire using RFID tag,' relates to a damage monitoring system and method for a pneumatic tire using an RFID tag, in which an impact applied to a tire while a vehicle is driving is stored in the RFID tag so that damage to the pneumatic tire can be detected in advance. The damage monitoring system for a pneumatic tire using an RFID tag according to that invention includes a pneumatic tire; an impact sensor that is mounted inside the pneumatic tire and detects an impact input to the pneumatic tire; and an RFID tag that stores the impact information detected by the impact sensor.

The EPC memory for RFID is usually defined by the ISO 20910 standard called SGTIN96. When the above-described method is used, the tire manufacturer, the product number, and the serial number can be easily inferred, but a problem arises in that each manufacturer has a different data system.

### <CITATION LIST>

(Patent Document 1) US Patent No. 7,319,380
(Patent Document 2) US Patent No. 9,177,183
(Patent Document 3) Korean Patent No. 10-2490773

### [DETAILED DESCRIPTION OF THE INVENTION]

### [TECHNICAL PROBLEM TO BE SOLVED]

An object of the present disclosure for solving the above problems is to provide a tire including an electronic device having data structures for tire management that allows the presence or absence of new electronic modules, such as a sound-absorbing material, a sealant, a stud, an additional material, and a sensor, which are additionally attached inside the structure of the tire or to the inner or outer surface of the tire, to be easily identified by reading an RFID tag without accessing an online database.

In addition, an object of the present disclosure is to provide an electronic device mounted on a tire that allows data to be easily input and read in an electronic device such as an RFID, a tire equipped with the electronic device, a tire management method using the electronic device, and a tire management system using the electronic device.

The technical problems to be achieved by the present disclosure are not limited to the technical problems mentioned above, and other technical problems not mentioned will be clearly understood by those of ordinary skill in the art to which the present disclosure pertains from the following description.

### [TECHNICAL SOLUTION]

The configuration of the present disclosure for achieving the above object is a tire including an electronic device having data structures for tire management, wherein the tire is provided with the electronic device, and the electronic device includes: a substrate unit on which a circuit is formed; an antenna unit provided on the substrate unit; and an EPC memory part provided on the substrate unit, wherein the EPC memory part consists of 96 bits or more, is configured to record and read a tire ID, and has a plurality of memories configured to divide and store a product serial number part.

In an embodiment of the present disclosure, the EPC memory part may be divided into four memories, and at least one of the memories may include a memory configured as a variable memory.

In an embodiment of the present disclosure, at least one of the four divided memories of the EPC memory part may include a serial number.

In an embodiment of the present disclosure, the memory including the serial number may be configured to distinguish memory sizes of a Company prefix and product information.

In an embodiment of the present disclosure, in the memory including the serial number, the number of digits of the product information that distinguishes the memory sizes of the Company prefix and the product information may consist of 3 bits and be indicated in binary.

In an embodiment of the present disclosure, the memory including the serial number may have an area capable of indicating additional information of the tire.

In an embodiment of the present disclosure, the additional information of the tire may include one or more of new electronic modules, such as a sound-absorbing material, a sealant, a stud, an additional material, and a sensor, which are additionally attached inside the structure of the tire or to the inner or outer surface of the tire.

In an embodiment of the present disclosure, in the memory including the serial number, the presence or absence of the additional information of the tire may consist of 1 bit and be indicated in binary.

In an embodiment of the present disclosure, the memory including the serial number may be configured to arrange and indicate, in order from left to right, the number of digits of the product information indicated in binary, the presence or absence of the additional information of the tire, and the serial number.

In an embodiment of the present disclosure, when binary data stored in the memory including the serial number is read as decimal data, the number of digits of the product information may first be determined using 3 bits in order from the left, and the remaining bits may be divided into three memories, excluding a first memory consisting of a header, a filter value, and a partition among the four divided memories of the EPC memory part, so as to be restored and indicated in the form of a decimal number or a combination of a decimal number and a character.

In an embodiment of the present disclosure, the electronic device may be an RFID tag, a transponder, or a TMS sensor.

In an embodiment of the present disclosure, there may be provided a management method of a tire including an electronic device, the method including: a step (s100) of inputting information of the electronic device; and a step (s200) of reading the information of the electronic device, wherein the step (s100) includes: a step (s110) in which consecutive numbers or characters, or a mixture of numbers and characters, composed of manufacturer information, product information, and serial number information, are input by an inputting unit; a step (s120) in which the input is classified by a conversion unit into the manufacturer information, the product information, and the serial number information, respectively, from the first column on the left, and converted into binary; and a step (s130) in which the classified manufacturer information, product information, and serial number information are input into respective memories.

In an embodiment of the present disclosure, the step (s200) may include: a step (s210) of converting the memory information into a decimal number; a step (s220) of converting the information into the manufacturer information; a step (s230) of converting the information into the product information; and a step (s240) of converting the information into the serial number information.

In an embodiment of the present disclosure, in the step (s120), when the serial number information is less than 12 digits, the serial number information may be converted into 12 digits by inputting 0 from the left. In an embodiment of the present disclosure, there may be provided a tire management system including an electronic device, the system including: an electronic device mounted on a tire; an input and reading device having an inputting unit that inputs information of the electronic device and a reading unit that reads the information of the electronic device; and a display module that displays output information, wherein the electronic device has a 96-bit memory, the memory part is divided into four memories, and the reading unit is configured to generate output information by converting, via a conversion unit, the information of the memory into a decimal number and converting the information into manufacturer information, product information, and serial number information.

### [ADVANTAGEOUS EFFECTS OF THE INVENTION]

The effect of the present disclosure according to the above configuration is that the presence or absence of new electronic modules, such as a sound-absorbing material, a sealant, a stud, an additional material, and a sensor, which are additionally attached inside the structure of the tire or to the inner or outer surface of the tire, can be easily identified by reading an RFID tag without accessing an online database.

In addition, intelligent tires, that is, tires that monitor the condition of a tire by attaching a sensor inside the tire and that estimate and provide various information such as tire load, wear, pressure, and temperature, have recently been developed, and sealant tires that self-repair a punctured portion when a puncture occurs in the tread of the tire have been released.

In addition, the demand for and production of tires to which a sound-absorbing material is attached have recently been increasing due to noise reduction and resonance reduction effects. Furthermore, tires to which a sensor and a sound-absorbing material are attached at the same time, and tires in which a sound-absorbing material and a sealant are present at the same time, have also been released. However, conventionally, there was a problem in that it was difficult to individually check whether such various materials, studs, electronic modules such as sensors, and sound-absorbing materials were attached inside the tire. According to the present disclosure, however, there is an advantage in that whether such materials, studs, electronic modules such as sensors, and sound-absorbing materials are attached to the tire can be easily identified without individually checking them.

In addition, according to the present disclosure, when tire storage data differs for each customer, data management can be made easier by identifying the input data structure through the product code of the tire ID and restoring and displaying it.

In addition, according to the present disclosure, the variable S2 and S3 areas can be determined by inputting the digit-number information of the third memory into a part of the S4 area, in which the number of bits is fixed in the SGTIN96 format of the ISO 20910 standard, so that an effect of more easily managing data in an electronic device such as an RFID can be expected.

The effects of the present disclosure are not limited to the above-mentioned effects, and should be understood to include all effects that can be inferred from the configuration of the invention described in the detailed description of the present disclosure or in the claims.

### [BRIEF DESCRIPTION OF THE DRAWINGS]

FIG. 1 is an exemplary diagram showing an attachment position of an electronic device according to an embodiment of the present disclosure.
FIG. 2 is an exemplary diagram of an electronic device according to an embodiment of the present disclosure.
FIG. 3 is an exemplary diagram of a configuration of a fourth memory according to an embodiment of the present disclosure.
FIG. 4 is an explanatory diagram for explaining an ISO standard for inputting a conventional tire ID.
FIG. 5 is a table explaining an information structure of the electronic device of the present disclosure.
FIG. 6 is an embodiment of information input of the electronic device of the present disclosure.
FIG. 7 is a table explaining two embodiments of the data structure of the electronic device of the present disclosure.
FIG. 8 is an embodiment of data stored in the electronic device of the present disclosure.
FIG. 9 is a configuration diagram of a tire management system having the electronic device of the present disclosure.

### [BEST MODE]

The most preferred embodiment according to the present disclosure is a tire including an electronic device having data structures for tire management, wherein the tire is provided with the electronic device, and the electronic device includes: a substrate unit on which a circuit is formed; an antenna unit provided on the substrate unit; and an EPC memory part provided on the substrate unit, wherein the EPC memory part consists of 96 bits or more, is configured to record and read a tire ID, and has a plurality of memories configured to divide and store a product serial number part.

### [DETIALED DESCRIPTION]

Hereinafter, the present disclosure will be described with reference to the accompanying drawings. However, the present disclosure may be implemented in various different forms and is therefore not limited to the embodiments described herein. In the drawings, parts irrelevant to the description have been omitted in order to clearly describe the present disclosure, and similar reference numerals are assigned to similar parts throughout the specification.

Throughout the specification, when a part is described as being "connected (joined, contacted, or coupled)" to another part, this includes not only the case of being "directly connected" but also the case of being "indirectly connected" with another member interposed therebetween. In addition, when a part is described as "including" a certain element, this means that the part may further include other elements rather than excluding other elements, unless specifically stated to the contrary.

The terms used herein are used merely to describe specific embodiments and are not intended to limit the present disclosure. Singular expressions include plural expressions unless the context clearly indicates otherwise. In this specification, terms such as "include" or "have" are intended to specify the presence of a feature, a number, a step, an operation, an element, a part, or a combination thereof described in the specification, and should be understood not to preclude in advance the presence or addition of one or more other features, numbers, steps, operations, elements, parts, or combinations thereof.

In addition, terms such as "part," "unit," and "module" described in the specification mean a unit that processes at least one function or operation, which may be implemented as hardware, software, or a combination of hardware and software.

In addition, in this specification, when a step is said to be located "before" or "after" another step, this includes not only the case where the step is in a direct chronological relationship with the other step, but also the case where the steps are in an indirect chronological relationship in which the order of the two steps may be changed, such as where another step intervenes between the steps.

Hereinafter, embodiments of the present disclosure will be described in detail with reference to the accompanying drawings.

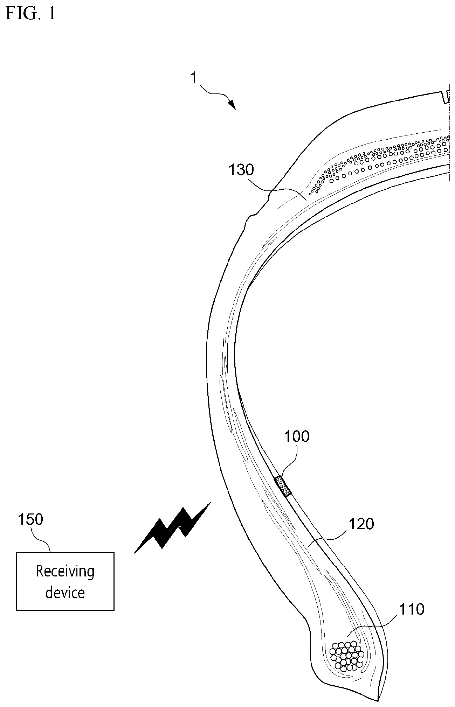

FIG. 1 is an exemplary diagram showing an attachment position of an electronic device according to an embodiment of the present disclosure.

Referring to FIG. 1, a tire 1 according to the present disclosure may have a first point 110 where a bead wire and bead wire rubber meet, a second point 120 which is an end of a bead filler, and a third point 130 which is an end of a carcass and a belt.

The electronic device 100 may be located between the first point 110 and the second point 120, or between the second point 120 and the third point 130.

Specifically, when the electronic device 100 is located between the first point 110 and the second point 120, the electronic device 100 may be located at a point corresponding to 10 to 80% of the length from the first point 110, as a starting point, to the second point 120.

When the electronic device 100 is located between the second point 120 and the third point 130, the electronic device 100 may be located at a point corresponding to 15 to 95% of the length from the second point 120, as a starting point, to the third point 130.

Alternatively, the electronic device 100 may be attached to or inserted into a sidewall, and may be provided in a range from a point 40 mm from the first point 110, which is the end of the bead wire, to the third point 130, which is the end of a second belt.

In addition, the electronic device 100 may be located within a radius of 40 mm to 60 mm from the center of the bead wire.

Meanwhile, the shape of the electronic device 100 is not limited, but the electronic device 100 may be provided in a form having at least one side of a polygon. In this case, since the electronic device 100 is provided in a plate shape, a flat portion of the electronic device 100 and an inner liner can be attached in parallel contact with each other. The present disclosure provided in this way can further reduce the risk of damage to the electronic device 100 and can improve attachment stability.

As an example, the electronic device 100 may be provided as a plate-shaped RFID having a total length of 30 to 150 mm, a width of 0.2 to 15 mm, and a thickness of 0.2 to 15 mm. However, the external dimensions of the electronic device 100 are not limited thereto.

In addition, depending on the position where the electronic device 100 is installed, the topping condition, or the condition in which the electronic device 100 is embedded in the tire, the reception frequency may be lowered compared to the transmission frequency.

Therefore, a dielectric constant from the attachment position of the semi-finished product to a receiving device 150 may be derived, and the transmission frequency of the electronic device 100 may be designed using the dielectric constant as a variable.

Specifically, the measurement position of the dielectric constant may be a position where a straight line connecting the installation positions of the electronic device 100 and the receiving device 150 meets the tire, excluding air.

More specifically, the receiving device 150 may be provided at a position of 1 mm to 1,500 mm from the surface of the sidewall of the tire, and may measure and derive the dielectric constant in consideration of the thickness at the vertical position where the electronic device 100 and the rubber interface meet.

That is, in the present disclosure, the dielectric constant affected by obstacles located between the electronic device 100 and the receiving device 150 may be measured and derived.

The electronic device 100 may be designed to transmit a value obtained by multiplying the reception frequency measured by the receiving device 150 by the square root of the derived dielectric constant.

In addition, the receiving device 150 may be further configured to determine whether the reception frequency falls within a preset error range from a target reception frequency, and to selectively adopt the information.

Specifically, when a frequency is received, the receiving device 150 may first compare whether the received reception frequency falls within the preset error range from the target reception frequency.

When the reception frequency is out of the preset error range from the target reception frequency, the information received while the reception frequency is out of the preset error range from the target reception frequency may be discarded without being utilized.

That is, the receiving device 150 may be configured to obtain only the information corresponding to a reception frequency that falls within the preset error range, and to then analyze the information to provide information necessary for the user.

The present disclosure provided in this way can minimize the possibility of alteration of information depending on the frequency, and thus can further improve the reliability of the information provided to the user.

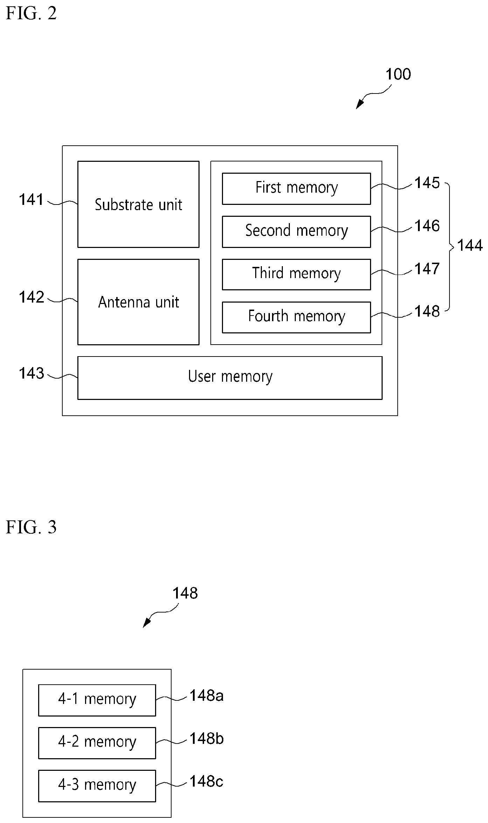

FIG. 2 is an exemplary diagram of an electronic device according to an embodiment of the present disclosure, and FIG. 3 is an exemplary diagram of a configuration of a fourth memory according to an embodiment of the present disclosure.

Referring to FIGS. 2 and 3, the electronic device 100 may include a substrate unit 141, an antenna unit 142, a user memory 143, and an EPC memory part 144.

The substrate unit 141 may be provided as a PCB substrate, and an electronic chip and a circuit may be formed thereon.

The substrate unit 141 may be provided by a single polymer material such as epoxy, or by various polymer combinations such as a synthetic resin of epoxy and phenol.

The antenna unit 142 is provided to transmit and receive data in one direction or in both directions, and may be provided such that power is generated. The antenna unit 142 may be embedded in and coupled to the substrate unit 141, or may be integrally provided through printing, attaching, or connecting work.

In addition, a coating material may be applied on the antenna unit 142 for protection and adhesive bonding, and the coating material may consist of a single polymer such as epoxy or a combination of two or more polymers.

The user memory 143 is formed on the substrate unit 141, and may be provided such that various data can be freely stored for each manufacturer and for each customer.

The EPC memory part 144 may be configured to divide and store tire-related data including a tire ID into a plurality of parts, and to divide and store a product serial number part.

Specifically, the EPC memory part 144 is formed on the substrate unit 141, may be configured to record and read data, and may consist of a total of 96 bits or more. More specifically, the EPC memory part 144 may be provided with 96 bits or more and 1,000 bits or less. However, the number of bits of the EPC memory part 144 is not limited thereto.

In an embodiment of the present disclosure, the EPC memory part 144 is set to 96 bits according to SGTIN96 defined by the ISO 20910 standard, and this will be described as an example.

The EPC memory part 144 is divided into a plurality of parts to store data, and in particular may be provided as a plurality of memories capable of dividing and storing the product serial number part. As an example, the EPC memory part 144 may include a first memory 145, a second memory 146, a third memory 147, and a fourth memory 148 capable of dividing the product serial number part and recording the presence or absence of a sound-absorbing material.

That is, the EPC memory part may be divided into four memories, at least one of the memories may include a memory configured as a variable memory, and furthermore, it is preferable that at least one of the four divided memories includes a serial number.

Specifically, the first memory 145 may be divided and formed into 14 bits, and may consist of a header, a filter value, and a partition.

The second memory 146 may be divided and formed into 20 to 40 bits, and may be provided to store a Company prefix. The Company prefix may include manufacturer information and the like, and may be indicated in decimal.

That is, the memory including the serial number is configured to distinguish the memory sizes of the Company prefix and the product information, and more specifically, the number of digits of the product information that distinguishes the memory sizes of the Company prefix and the product information may consist of 3 bits and be indicated in binary.

Meanwhile, the memory including the serial number has an area capable of indicating additional information of the tire, and the additional information of the tire may include one or more of new electronic modules, such as a sound-absorbing material, a sealant, a stud, an additional material, and a sensor, which are additionally attached inside the structure of the tire or to the inner or outer surface of the tire.

In addition, in the memory including the serial number, the presence or absence of the additional information of the tire may consist of 1 bit and be indicated in binary, and the memory may be formed to arrange and indicate, in order from left to right, the number of digits of the product information indicated in binary, the presence or absence of the additional information of the tire, and the serial number.

That is, the third memory 147 may be divided and formed into 4 to 24 bits, and may be provided such that the product information is indicated in decimal with 1 to 7 digits. The product information may include information such as the size and type of the tire.

The total number of bits of the second memory 146 and the third memory 147 may be variably provided so as to be 44 bits.

The fourth memory 148 may be divided and formed into 38 bits, and may be provided such that a serial number is indicated.

In addition, the fourth memory 148 may be provided to distinguish the memory sizes of the Company prefix and the product information, and to further indicate whether the tire is a sound-absorbing material tire.

Specifically, the fourth memory 148 may include a 4-1 memory 148a, a 4-2 memory 148b, and a 4-3 memory 148c.

The 4-1 memory 148a consists of 3 bits, and may be provided to indicate the number of digits of the product information in binary.

The 4-2 memory 148b consists of 1 bit, and may be provided to indicate, in binary, whether a sound-absorbing material is attached.

The 4-3 memory 148c consists of 34 bits, and may be provided to indicate the serial number in binary.

**[Table 1]**

| **Item** | **Decimal** | **Binary** | **Remarks** |
|---|---|---|---|
| Company Prefix | 8808563 | 100001100110100000000000 | 24 bit |
| Product information (SKU) | 123456 | 11110001001000000 | 20 bit |
| Serial Number | 601011215321 | 10100000111100010001011110101111011001 | 38 bit |

**[Table 2]**

| **Number of digits of product information (Decimal)** | **Binary indication** | **Sound-absorbing material tire bit (Decimal - sound-absorbing material classification)** | **Binary indication** | **4-1 memory and 4-2 memory indication** |
|---|---|---|---|---|
| 1 | 000 | 0 (not attached) | 0 | 0000 |
| 2 | 001 | 0 (not attached) | 0 | 0010 |
| 3 | 010 | 0 (not attached) | 0 | 0100 |
| 4 | 011 | 0 (not attached) | 0 | 0110 |
| 5 | 100 | 0 (not attached) | 0 | 1000 |
| 6 | 101 | 0 (not attached) | 0 | 1010 |
| 7 | 111 | 0 (not attached) | 0 | 1110 |
| 1 | 000 | 1 (attached) | 1 | 0001 |
| 2 | 001 | 1 (attached) | 1 | 0011 |
| 3 | 010 | 1 (attached) | 1 | 0101 |
| 4 | 011 | 1 (attached) | 1 | 0111 |
| 5 | 100 | 1 (attached) | 1 | 1001 |
| 6 | 101 | 1 (attached) | 1 | 1011 |
| 7 | 111 | 1 (attached) | 1 | 1111 |

For example, referring to Table 1 and Table 2, the product information in the third memory 147 is 123456, which consists of 6 digits. In this case, the 4-1 memory 148a can be read by converting the fact that the number of digits of the product information is 6 into 101, which is a binary number.

In addition, the 4-2 memory 148b may be provided to indicate 0 when a sound-absorbing material such as foam is not attached to the tire, and to indicate 1 when a sound-absorbing material is attached.

The 4-3 memory 148c may be provided to indicate, with the remaining 34 bits, the decimal number of the serial number in binary.

The fourth memory 148 provided in this way may be configured to arrange and indicate, in order from left to right, the number of digits of the product information indicated in binary, whether the sound-absorbing material is attached, and the serial number.

Conversely, when binary data stored in the fourth memory 148 is read as decimal data, the number of digits of the product information of the third memory 147 is first determined using 3 bits in order from the left, and whether the sound-absorbing material is attached is then distinguished using the next 1 bit. The remaining bits, excluding the 14 bits of the first memory 145, are divided into the second memory 146, the third memory 147, and the fourth memory 148 so as to be restored and indicated in the form of a decimal number or a combination of a decimal number and a character.

That is, when binary data stored in the memory including the serial number is read as decimal data, the number of digits of the product information is first determined using 3 bits in order from the left, and the remaining bits are divided into three memories, excluding the first memory consisting of the header, the filter value, and the partition among the four divided memories of the EPC memory part, so as to be restored and indicated in the form of a decimal number or a combination of a decimal number and a character.

According to the present disclosure provided in this way, whether a sound-absorbing material is attached to a tire can be easily identified by reading an RFID tag without accessing an online database. More specifically, the demand for and production of tires to which a sound-absorbing material is attached have recently been increasing due to noise reduction and resonance reduction effects. Conventionally, however, there was a problem in that it was difficult to individually check whether a sound-absorbing material was attached inside the tire. According to the present disclosure, there is an advantage in that whether such a sound-absorbing material is attached to the tire can be easily identified without individually checking.

Even when another attachment or material is included, whether the attachment is attached can be known by indicating the item of the 4-2 memory as 0 or 1. In order to distinguish among attachments, electronic modules such as studs and sensors, sound-absorbing materials, and the like, they can be identified through the product code in the tire ID. Since the tire manufacturer operates a different product code according to the presence, form, and type of each attachment, the attachment can be easily identified by combining the product code and the item of the 4-2 memory.

In addition, according to the present disclosure, when tire storage data differs for each customer, data management can be made easier by identifying the input data structure through the product code of the tire ID and restoring and displaying it.

In the present disclosure provided in this way, an RFID tag, a transponder, a TMS sensor, or the like may be used as the electronic device, and not only a sound-absorbing material such as foam, but also a tire having a special characteristic, such as an electronic module including a sealant, a stud, an additional material, and a sensor, may be further distinguished by using an identifier.

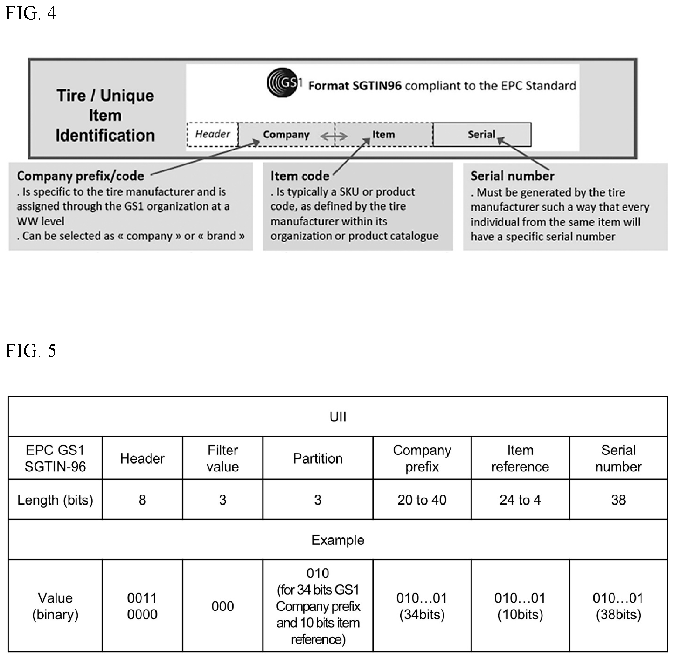

FIG. 4 is a table explaining the SGTIN96 method, which is the ISO standard for RFID of a conventional tire. An ISO standard has been established and published for inputting the ID of a tire, and in the standard, a tire manufacturer number, product information, and a tire serial number are indicated as a unique number of each manufacturer. The ISO standard follows the format of GS1, an international private standards organization, and indicates the unique number in binary.

FIG. 5 is a table explaining the information structure of the electronic device of the present disclosure.

The electronic device according to the present embodiment may be a radio frequency identification (RFID) device.

When an RFID is used as the electronic device, the RFID may be installed by being attached to the inner liner surface of the tire, or by being inserted between the respective semi-finished products of the tire.

The RFID may have a 96-bit memory.

The memory of 96 bits or more may be divided into a first memory, a second memory, a third memory, and a fourth memory.

In this case, the first memory may store data declaring the SG-TIN96 format, such as a 14-bit header, filter value, and partition information.

In addition, the second memory may store manufacturer information (Company prefix/code) of 24 bits or more.

In addition, the third memory may store product information (Item code) of 20 bits or more.

In addition, the fourth memory may store serial number information of 38 bits or more.

Here, the electronic device 100 may be an RFID tag, a transponder, or a TMS sensor. The header, the filter value, and the partition data may each be data declaring the SG-TIN96 format. Hereinafter, the same applies.

In the embodiment shown in FIG. 5, in the memory of a total of 96 bits or more, an 8-bit header, a 3-bit filter value, a 3-bit partition field, a 20-bit manufacturer (Company prefix), a 24-bit product code (Item code), and a 38-bit serial number are allocated.

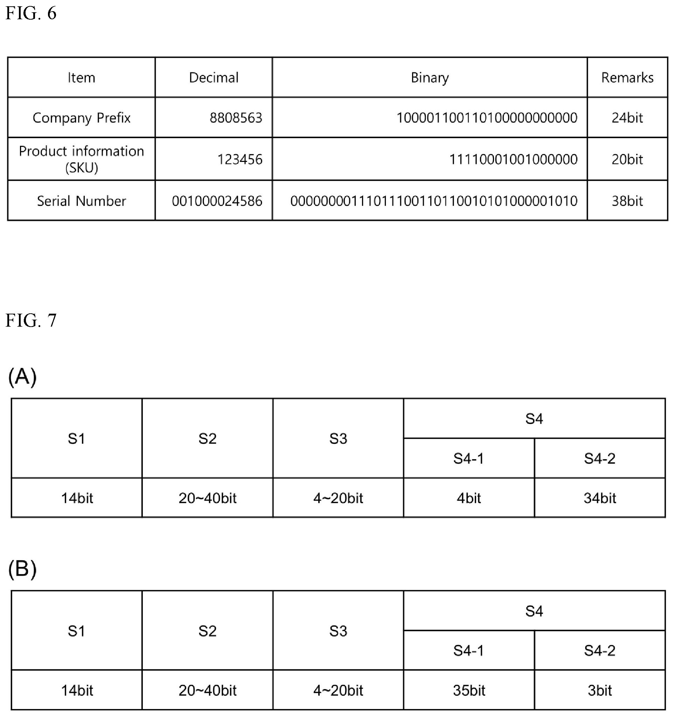

FIG. 6 is an embodiment of information input of the electronic device (RFID) of the present disclosure.

As shown in the table of FIG. 6, the manufacturer (Company prefix/code) information is 8808563, which is 7 digits and becomes 24 bits in binary; the product (Item code) information is 123456, which is 6 digits and becomes 20 bits in binary; and the serial number is 001000024586, which is 12 digits and becomes 38 bits in binary.

In particular, the present disclosure sets the serial number information to 12 digits, and when the input information is less than 12 digits, the input information can be converted into 12 digits by inputting 0 from the left.

According to this configuration, by unifying the number of digits of the input numbers, an effect of systematically unifying the information systems that differ for each manufacturer can be expected.

The serial number information shown in the table of FIG. 6 is 001000024586, and the 00 on the left corresponds to the 0s added to match the number of digits.

FIG. 7 is a table explaining two embodiments of the data structure of the electronic device 100 of the present disclosure. As described above, since the second memory and the third memory differ for each manufacturer, the embodiment of FIG. 7(A) provides a configuration in which a part of the fourth memory, which is an area that is constant in common for all manufacturers, is allocated as an area indicating the number of digits of the third memory. As the information in the 4-1 memory determines the number of digits of the third memory, the number of digits of the second memory may also be determined according to the number of remaining bits.

As the embodiment of FIG. 7(B), in an electronic device 100 mounted on a tire 1 and having a memory of 96 bits or more, the memory being divided into four areas, among the four areas, the first memory stores header, filter value, and partition data of 14 bits or more; the second memory stores a Company prefix of 20 to 40 bits; the third memory stores product information of 4 to 20 bits; and the fourth memory stores serial number information of 38 bits or more, wherein the fourth memory is divided into a 4-1 memory of 35 bits or more and a 4-2 memory of 3 bits or more, and the 4-2 memory stores data corresponding to the number of digits of the data of the third memory, thereby providing an electronic device 100 mounted on a tire 1.

In the above embodiment, the 4-2 memory, which stores the digit-number information of the third memory, is allocated to the last 3 bits of the fourth memory. Since this area is at the very end, a separate identification bit for area division is not required, and therefore 3 bits are sufficient.

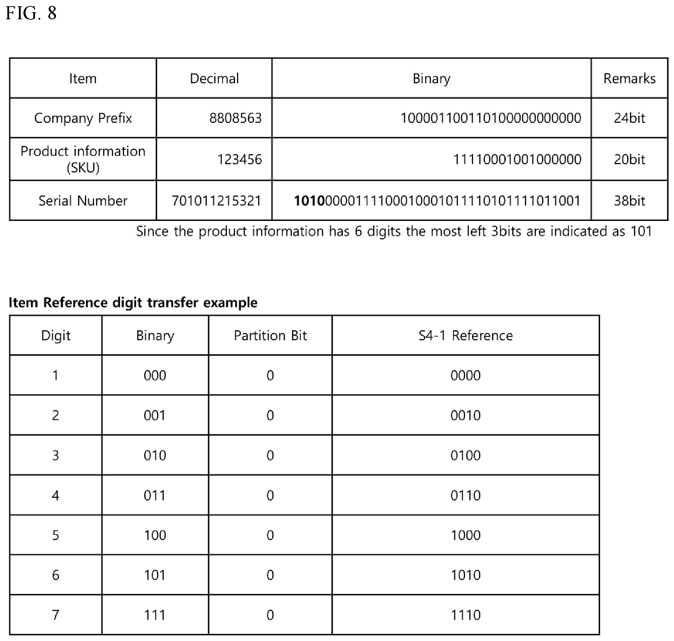

FIG. 8 is an embodiment of data stored in the electronic device 100 of the present disclosure. As shown in the first table of the embodiment of FIG. 8, it can be confirmed that '101', which indicates the 6 digits of the third memory, is input to the first 3 bits of the 4-1 memory, and '0' for dividing the area is input to the fourth bit. The second table of FIG. 8 shows an input example of the binary number according to the number of digits of the third memory. In the table, 1 to 7 are indicated in binary, and it can be confirmed that '0' for dividing the area is input to the fourth bit.

Additionally, the present disclosure also provides a management method of a tire having an electronic device.

That is, the management method of a tire having an electronic device according to the present embodiment includes a step (s100) of inputting information of the electronic device and a step (s200) of reading the information of the electronic device.

In this case, the electronic device described above may be used as the electronic device.

The step (s100) of inputting information of the electronic device may include: a step (s110) in which consecutive numbers or characters, or a mixture of numbers and characters, composed of manufacturer information, product information, and serial number information, are input by an inputting unit; a step (s120) in which the input is classified by a conversion unit into the manufacturer information, the product information, and the serial number information, respectively, from the first column on the left, and converted into binary; and a step (s130) in which the classified manufacturer information, product information, and serial number information are input into respective memories.

The step (s200) of reading the information of the electronic device may include a step (s210) of converting the memory information into a decimal number, a step (s220) of converting the information into the manufacturer information, a step (s230) of converting the information into the product information, and a step (s240) of converting the information into the serial number information.

Specifically, the step s200 may include a step (s210) of converting the information of the second memory, the third memory, and up to the fourth memory in the memory into a decimal number, a step (s220) of returning 24 bits, starting from the bit including the 15th bit from the left of the information, as the manufacturer information, a step (s230) of returning the 20 bits following the 24 bits as the product information, and a step (s240) of returning the 38 bits following the 20 bits as the serial number information.

Here, in the step (s120) of classifying, by the conversion unit, the 7 digits from the first column on the left as the manufacturer information, the 6 digits as the product information, and the remaining digits as the serial number information, it is preferable that, when the serial number information is less than 12 digits, the serial number information is converted into 12 digits by inputting 0 from the left.

According to this configuration, by unifying the number of digits of the input numbers, an effect of systematically unifying the information systems that differ for each manufacturer can be expected.

In addition, the present disclosure provides a tire management method using an electronic device 100, the method including a step (s100) of inputting data into the electronic device 100 and a step (s200) of reading data from the electronic device 100,
wherein the electronic device 100 has a memory of 96 bits or more, and the memory is divided into four areas;
Among the four areas, the first memory stores header, filter value, and partition data of 14 bits or more; the S2 area stores manufacturer information (Company prefix) of 24 bits or more; the S3 area stores product information of 20 bits or more; and the S4 area stores serial number information of 38 bits or more, the S4 area being divided into a 4-1 memory of 4 bits or more and a 4-2 memory of 34 bits or more; and
The step (s100) of inputting data into the electronic device 100 includes: a step (s110) in which consecutive numbers composed of company information, product information, and a serial number are input by an input device; a step (s120) in which, among the consecutive numbers, the manufacturer information is converted into binary and input into the S2 area, and the product information is converted into binary and input into the S3 area, respectively; a step (s130) in which the number of digits of the product information data is calculated; a step (s120) in which a binary number corresponding to the number of digits of the product information data is input into the first 3 bits of the 4-1 memory; a step (s130) in which '0' for area division is input into the last bit of the 4-1 memory; and a step (s140) in which a serial number is generated and input into the 4-2 memory.

As described above, in the step (s120) in which a binary number corresponding to the number of digits of the product information data is input into the first 3 bits of the 4-1 memory, and in the step (s130) in which '0' for area division is input into the last bit of the 4-1 memory, the digit-number information of the product information data of the third memory is input as a binary number. It is preferable that the number of digits of the product information is the number of digits of a decimal number.

Thereafter, in the step (s140) in which a serial number is generated and input into the 4-2 memory, the generated serial number is input into the 4-2 memory following the 4-1 memory.

The step (s200) of reading data from the electronic device 100 may include: a step (s210) of returning the first 3 bits of the 4-1 memory to confirm the length of the third memory; a step (s220) of confirming that the data of the electronic device 100 is divided into the second memory to the fourth memory, excluding the 14 bits of the first memory, among the four memories; and a step (s230) of converting the data into a decimal number according to the divided areas.

According to the above configuration, since the numbers of digits of the second memory and the third memory, which have different specifications for each manufacturer, can be confirmed by first returning the information input to the 4-1 memory, there is an advantage in that accurate management can be achieved regardless of the manufacturer.

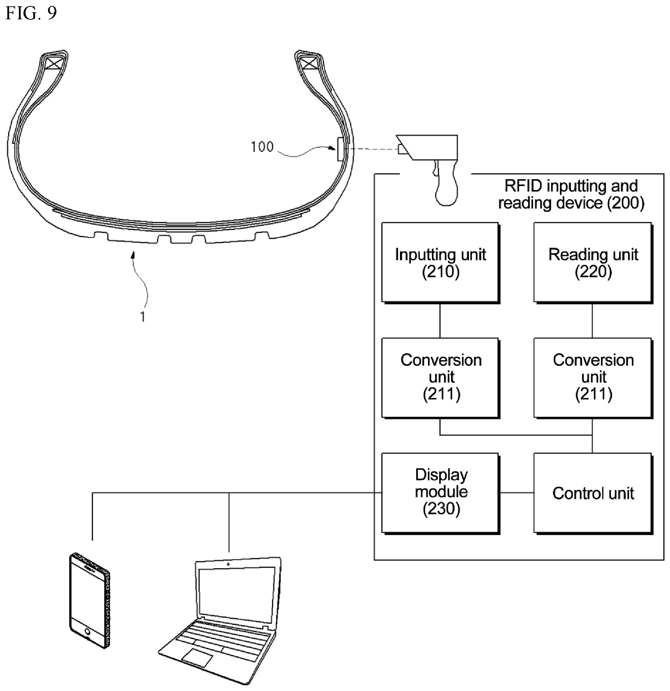

FIG. 9 is a configuration diagram of a tire management system having the electronic device of the present disclosure.

As shown in FIG. 9, the present disclosure also provides a tire management system having an electronic device.

That is, the tire management system having an electronic device according to the present embodiment includes an electronic device 100 mounted on a tire, and an input and reading device 200 having an inputting unit 210 that inputs information of the electronic device 100 and a reading unit 220 that reads the information of the electronic device 100.

In this case, the electronic device described above may be used as the electronic device, and the electronic device has a 96-bit memory, which may be divided into four memories.

When consecutive numbers composed of manufacturer information, product information, and serial number information are input to the inputting unit 210 of the input and reading device 200, a conversion unit 211 classifies, from the first column on the left, the 7 digits as the manufacturer information, the 6 digits as the product information, and the remaining digits automatically as the serial number information. Thereafter, the automatically classified manufacturer information, product information, and serial number information can be input into the second memory, the third memory, and the fourth memory of the electronic device 100, respectively.

The reading unit 220 of the input and reading device 200 may be configured to generate output information by converting, via a conversion unit 221, the information of the memory into a decimal number and converting the information into the manufacturer information, the product information, and the serial number information.

Specifically, in the four areas corresponding to the first to fourth memories of the 96-bit information, the information of the second memory, the third memory, and up to the fourth memory is converted into a decimal number; 24 bits, starting from the bit including the 15th bit from the left of the information, are returned as the manufacturer information; the 20 bits following the 24 bits are returned as the product information; and the 38 bits following the 20 bits are returned as the serial number information, thereby generating output information.

The output information generated in this way may be displayed through a display module 230.

The input and reading device 200 can write or read information by accessing the electronic device 100 installed in the tire 1, and as shown in FIG. 9, may be manufactured in the form of a portable type, a PDA-combined terminal type, or the like.

In addition, since the display module 230 displays the output information, the display module 230 may have a configuration in which a display is directly installed on the input and reading device 200, or, as shown in FIG. 9, may be connected to a smartphone or another terminal by wire or wirelessly to display the output information.

Although the foregoing description of the present disclosure has been made with reference to the limited drawings, it is for illustrative purposes only, and those of ordinary skill in the art to which the present disclosure pertains will understand that various modifications can readily be made into other specific forms without changing the technical spirit or essential features of the present disclosure. Therefore, the embodiments described above should be understood as illustrative in all respects and not restrictive. For example, each element described as a single type may be implemented in a distributed manner, and likewise, elements described as being distributed may be implemented in a combined form. In addition, the described techniques may be performed in an order different from the described method.

The embodiments described herein and the accompanying drawings merely illustrate part of the technical ideas included in the present disclosure. Accordingly, the scope of the present disclosure is defined by the appended claims, and all changes or modifications derived from the meaning and scope of the claims and equivalent concepts thereof should be construed as being included within the scope of the present disclosure.

### <Reference Signs>

1: tire
100: electronic device
110: first point
120: second point
130: third point
141: substrate unit
142: antenna unit
143: user memory
144: EPC memory part
145: first memory
146: second memory
147: third memory
148: fourth memory
148a: 4-1 memory
148b: 4-2 memory
148c: 4-3 memory
150: receiving device
200: inputting and reading device
210: inputting unit
211: conversion unit

## Claims

1. A tire including an electronic device having data structures for tire management,
wherein the tire is provided to have the electronic device, the electronic device comprising:
a substrate unit on which a circuit is formed;
an antenna unit provided on the substrate unit; and
an EPC memory part provided on the substrate unit,
wherein the EPC memory part consists of 96 bits or more, and the EPC memory part is configured to record and read a tire ID, and has a plurality of memories configured to divide and store a product serial number part, the tire including the electronic device having the data structure for tire management.

2. The tire including an electronic device having data structures for tire management of claim 1,
wherein the EPC memory part is divided into four memories, and at least one of the memories includes a memory configured as a variable memory.

3. The tire including an electronic device having data structures for tire management of claim 2,
wherein at least one of the four divided memories of the EPC memory part includes a serial number.

4. The tire including an electronic device having data structures for tire management of claim 3,
wherein the memory including the serial number is configured to distinguish memory sizes of a Company prefix and product information.

5. The tire including an electronic device having data structures for tire management of claim 4,
wherein the memory including the serial number, a
number of digits of the product information that distinguishes the memory sizes of the Company prefix and the product information is formed in 3 bits and is indicated in binary.

6. The tire including an electronic device having data structures for tire management of claim 3,
wherein the memory including the serial number has an area capable of indicating additional information of the tire.

7. The tire including an electronic device having data structures for tire management of claim 6,
wherein the additional information of the tire includes one or more of new electronic modules, a sound-absorber, a sealant, a stud, an additional material, and a sensor, which are additionally attached inside a structure of the tire or to an inner or outer surface of the tire.

8. The tire including an electronic device having data structures for tire management of claim 6,
wherein the memory including the serial number, presence or absence of the additional information of the tire is formed in 1 bit and is indicated in binary.

9. The tire including an electronic device having data structures for tire management of claim 8,
wherein the memory including the serial number is configured to arrange and indicate, in order from left to right, a number of digits of product information indicated in binary, the presence or absence of the additional information of the tire, and the serial number.

10. The tire including an electronic device having data structures for tire management of claim 9,
when binary data stored in the memory including the serial number is read as decimal data, a number of digits of product information is first determined using 3 bits in order from the left, and remaining bits are divided into three memories, excluding a first memory consisting of a header, a filter value, and a partition among the four divided memories of the EPC memory part, so as to be restored and indicated in a form of a decimal number or a combination of a decimal number and a character.

11. The tire including an electronic device having data structures for tire management of claim 1,
wherein the electronic device is one of an RFID tag, a transponder, or a TMS sensor.

12. A management method of a tire including an electronic device, the method including:
a step (s100) of inputting information of the electronic device; and
a step (s200) of reading the information of the electronic device,
wherein the step s100 comprises:
a step (s110) in which consecutive numbers or characters, or a mixture of numbers and characters, composed of manufacturer information, product information, and serial number information, are input by an inputting unit;
a step (s120) in which the input is classified by a conversion unit into the manufacturer information, the product information, and the serial number information, respectively, from a first column on the left, and converted into binary; and
a step (s130) in which the classified manufacturer information, product information, and serial number information are input into respective memories.

13. The management method of a tire including an electronic device of claim 12,
wherein the step (s200) comprises:
a step (s210) of converting memory information into a decimal number;
a step (s220) of converting the information into the manufacturer information;
a step (s230) of converting the information into the product information; and
a step (s240) of converting the information into the serial number information.

14. The management method of a tire including an electronic device of claim 12,
wherein in the step (s120), when the serial number information is less than 12 digits, the serial number information is converted into 12 digits by inputting 0 from the left.

15. A management system of a tire including an electronic device, the system including:
an electronic device mounted on a tire;
an inputting and reading device having an inputting unit that inputs information of the electronic device and a reading unit that reads the information of the electronic device; and
a display module that displays output information,
wherein the electronic device has a 96-bit memory,
wherein the memory part is divided into four memories, and
wherein the reading unit is configured to generate output information by converting, via a conversion unit, the information of the memory into a decimal number and converting the information into manufacturer information, product information, and serial number information.
